# EUROPÄISCHE PATENTSCHRIFT

(11) **EP 1 336 331 B1**
(45) Veröffentlichungstag und Bekanntmachung des Hinweises auf die Patenterteilung: **19.03.2008**
(21) Anmeldenummer: 03100184.5
(22) Anmeldetag: 29.01.2003
(51) Int. Cl.: A01B 73/04, A01B 63/32

(54) **Einrichtung zum Bewegen einer Arbeitseinheit**
Working unit moving arrangement
Arrangement pour bouger une unité de travail

(30) Priorität: 16.02.2002 DE 10206507
(43) Veröffentlichungstag der Anmeldung: 20.08.2003
(73) Patentinhaber: DEERE & COMPANY, Moline, Illinois 61265-8098 (US)
(72) Erfinder: Guiet, Lionel, 70100, Gray (FR)
(74) Vertreter: Holst, Sönke

(56) Entgegenhaltungen:
- EP-A- 1 051 895
- FR-A- 2 086 286
- US-A- 4 307 559

## Beschreibung

Die Erfindung betrifft eine Einrichtung zum Bewegen einer Arbeitseinheit eines landwirtschaftlichen Arbeitsgeräts zwischen einer ersten Stellung und einer zweiten Stellung, mit einem Aktor, der eine mit einem unter Druck stehenden Medium beaufschlagbare Kammer aufweist und mit der Arbeitseinheit derart gekoppelt ist, dass durch Beaufschlagen der Kammer mit dem Medium die Arbeitseinheit in die zweite Stellung und durch Nichtbeaufschlagen der Kammer mit dem Medium die Arbeitseinheit in die erste Stellung verbringbar ist, einem Druckspeicher, einem ersten Ventil, das sich zwischen einer Quelle des unter Druck stehenden Mediums und der Kammer befindet, einem zweiten Ventil, das sich zwischen der Kammer und dem Druckspeicher befindet, und einem Druckbegrenzerventil, durch welches die Kammer mit einem Vorratsbehälter verbunden ist.

Bei vielen Typen landwirtschaftlicher Arbeitsmaschinen wird ein Arbeitsgerät an einem selbstfahrenden Trägerfahrzeug befestigt. Das beispielsweise zum Ernten von Pflanzen eingerichtete Arbeitsgerät ist in vielen Fällen höhenverstellbar, um die Arbeitshöhe über dem Boden vorgeben zu können. Alternativ kann eine Auflagekraft des Arbeitsgeräts auf dem Boden variierbar sein. Derartige Arbeitsgeräte lassen sich in der Regel zu Transportzwecken in eine Außerbetriebsstellung bewegen.

Die US 4 307 559 A offenbart eine Rasenpflegemaschine mit mehreren Arbeitseinheiten, die jeweils über Hydraulikzylinder in eine angehobene und in eine abgesenkte Stellung bringbar sind. Die Maschine enthält einen mit den Hydraulikzylindern verbindbaren Druckspeicher, durch den eine Ausgleichsbewegung hervorgerufen werden kann. Die Steuerung der Maschine erfolgt über ein jeweils einer Arbeitseinheit zugeordnetes Steuerventil, welches jeweils eine Neutral-, Hebe-, Senk- und Ausgleichsstellung aufweist. In der Senkstellung ist es vorgesehen, dass die Hydraulikzylinder abgesenkt werden und gleichzeitig der Druckspeicher geladen wird, um einen entsprechenden Ausgleichsdruck aufbauen zu können. Durch Umschalten in die Ausgleichsstellung kann eine Korrektur der abgesenkten Stellung der einzelnen Arbeitseinheiten erfolgen. Das Absenken der Arbeitseinheiten ist hierbei zeitaufwändig, da sich der durch das Gewicht der Arbeitseinheiten, welche den Hydraulikzylinder bewegen, im Hydraulikzylinder entstehende Druck nur langsam abbauen kann.

Die FR 2 086 286 A offenbart ein Hubgestänge für den Anbau von Arbeitsgeräten an einen Schlepper, wobei die Arbeitsgeräte über das mit einem Hubzylinder verbundene Hubgestänge in eine angehobene und in eine abgesenkte Stellung bringbar sind. Ein über einen Absperrhahn zuschaltbarer Druckspeicher dient zum Ausgleich von Stößen. Das Absenken der Arbeitsgeräte gestaltet sich auch hier als zeitaufwändig.

In der EP 1 051 895 A ist eine landwirtschaftliche Arbeitsmaschine in Form eines Mähgeräts beschrieben. Das Mähgerät weist mehrere mechanisch voneinander getrennte Arbeitseinheiten mit Mäheinrichtungen auf, die durch Hydraulikzylinder in ihre Transportstellungen hochschwenkbar sind. Die Hydraulikzylinder können durch einen steuernden, zwischen dem Trägerfahrzeug und der Arbeitsmaschine angeordneten Hubzylinder mit Hydraulikfluid beaufschlagt und so in die Transportposition verbracht werden. Zum Verschwenken aus der Transportposition in die Arbeitsposition wird das Hydraulikfluid aus den Hydraulikzylindern der Arbeitseinheiten abgelassen. Ein elastischer Druckspeicher ist an den Hydraulikzylinder der Arbeitseinheit angeschlossen, um die Funktion eines Stöße abfedernden Dämpfungselements zu übernehmen, die Bodenunebenheiten auf die in Arbeitsposition den Boden berührende Arbeitseinheit bewirken. Das Dämpfungselement ist beim Verschwenken von der Arbeits- in die Transportstellung durch ein Absperrventil vom Hydraulikzylinder getrennt. Um zu gewährleisten, dass das Absperrventil in der geschlossenen Position verbleibt, solange die Arbeitseinheiten in angehobener Position verharren, ist ein Druckaufnehmer vorgesehen, der in Abhängigkeit von dem die Arbeitseinheiten oben haltenden Druck ein Signal generiert, welches das Absperrventil geschlossen hält, solange der Druck besteht. Nach Unterschreitung eines Schwellwertes des Drucks wird nach dem Absenken der Arbeitseinheiten das Absperrventil wieder geöffnet. Dann sind die Arbeitseinheiten heruntergeklappt und der durch ein Sicherheitsventil festgelegte Druck im Zylinder definiert die Auflagekraft und das Dämpfungselement nimmt eventuelle Stoßbelastungen auf. Das Dämpfungselement ist somit nur dann mit dem die Arbeitseinheiten verschwenkenden Hydraulikzylinder verbunden, wenn die Arbeitseinheiten sich in der Arbeitsposition befinden.

Als nachteilig ist bei der bekannten Arbeitsmaschine anzusehen, dass ein steuernder Hubzylinder zum Anheben und Absenken der Arbeitseinheiten erforderlich ist. Das Absenken der Arbeitseinheiten ist recht zeitaufwändig, da sich der durch das Gewicht der Arbeitseinheiten, welche den Hydraulikzylinder bewegen, im Hydraulikzylinder entstehende Druck relativ langsam abbaut. Schließlich bewegen sich immer alle drei Arbeitseinheiten gleichzeitig, so dass der Arbeitsvorgang der in Fahrtrichtung versetzt hintereinander angeordneten Arbeitseinheiten nicht auf einer Geraden erfolgt. Dadurch können sich beispielsweise bei senkrecht zueinander liegenden Schwaden Schwierigkeiten ergeben.

Die der Erfindung zugrunde liegende Aufgabe wird darin gesehen, ein verbessertes Bewegungssystem für ein Arbeitsgerät bereitzustellen, bei dem die genannten Nachteile nicht vorliegen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf ein beliebiges landwirtschaftliches Arbeitsgerät, das wenigstens eine zwischen einer ersten Stellung und einer zweiten Stellung bewegbare Arbeitseinheit aufweist. Die erste Stellung ist in der Regel, aber nicht unbedingt, eine Betriebsstellung, während es sich bei der zweiten Stellung insbesondere um eine Außerbetriebsstellung handeln kann. Zur Bewegung der Arbeitseinheit ist ein Aktor vorgesehen, der eine mit einem Medium (z. B. Hydraulikflüssigkeit oder Luft) beaufschlagbare Kammer aufweist. Die Kammer wird mit Druck beaufschlagt, um die Arbeitseinheit in die zweite Stellung zu verbringen. Zurück in die erste Stellung gelangt sie in der Regel durch die Schwerkraft. Die Erfindung schlägt vor, dass ein drittes Ventil, welches sich zwischen der Kammer und dem Vorratsbehälter für das Medium befindet, und eine mit den Ventilen verbundene elektronische Steuerung vorgesehen ist, derart ausgebildet, dass bei Schließen des ersten Ventils das zweite Ventil und das dritte Ventil automatisch öffenbar sind, so dass die Kammer des Aktors mit dem Druckspeicher verbunden ist, wenn sich die Arbeitseinheit von der zweiten Stellung in die erste Stellung bewegt. Da der Druck im Druckspeicher wesentlich geringer gehalten werden kann als der zum Anfang der Bewegung in die erste Stellung in der Kammer herrschende Druck, führt das Ankoppeln des Druckspeichers an die Kammer zu einer schnellen, aber sanften Drucksenkung.

Auf diese Weise gelangt die Arbeitseinheit schnell und sanft in die erste Stellung.

Der Druckspeicher wird zweckmäßigerweise von der Kammer getrennt, wenn die Arbeitseinheit in die zweite Stellung verbracht wird (und sich dort befindet), so dass er nicht mit dem unter Druck stehenden Medium beaufschlagt wird, welches den Aktor veranlasst, die Arbeitseinheit in die Stellung zu verbringen.

Es bietet sich an, den Aktor derart anzuordnen, dass er die Arbeitseinheit auch in der ersten Stellung abstützt. Die Arbeitseinheit liegt dann nicht an einem mechanischen Anschlag o. dgl. an, sondern der in der Kammer des Aktors vorhandene Druck definiert den Auflagedruck der Arbeitseinheit auf den Boden. Die Kammer ist dann mit dem Druckspeicher verbunden, der bei der Arbeit eventuelle durch Bodenunebenheiten entstehende Stoßbelastungen aufnimmt. Um einen definierten Druck in der Kammer zu erzeugen, ist ein Druckbegrenzerventil zwischen die Kammer des Aktors und einen Vorratsbehälter für das Medium geschaltet. Das Druckbegrenzerventil lässt das Medium so lange in den Vorratsbehälter ab, wie der in der Kammer herrschende Druck den Abschaltdruck des Druckbegrenzerventils überschreitet. Der Abschaltdruck des Druckbegrenzerventils kann ferngesteuert sein und durch einen Bediener eingegeben oder eine selbsttätige Steuerung vorgegeben werden.

Die Steuerung steuert verschiedene Ventile der erfindungsgemäßen Einrichtung: Ein erstes Ventil, das sich zwischen der Kammer und einer Quelle unter Druck stehenden Mediums befindet, ein zweites Ventil, das zwischen der Kammer und dem Druckspeicher angeordnet ist, und ein drittes Ventil, das sich zwischen der Kammer und einem Vorratsbehälter für das Medium befindet. Das dritte Ventil kann mit dem Druckbegrenzerventil in Reihe geschaltet sein. Denkbar wäre aber auch, es ihm parallel zu schalten, um das Ablassen des Mediums in den Vorratsbehälter zu beschleunigen, wenn die Arbeitseinheit von der zweiten Stellung in die erste Stellung verbracht wird. Dann ist aber ein viertes, nur in der ersten Stellung offenes Ventil mit dem Druckbegrenzerventil in Reihe zu schalten. Die elektronische Steuerung steuert die in der Regel elektromagnetischen Ventile. In der ersten Stellung ist das erste Ventil geschlossen, das zweite Ventil geöffnet und das dritte Ventil geöffnet, wenn es mit dem Druckbegrenzerventil in Reihe geschaltet ist, sonst geschlossen. Soll die Arbeitseinheit in die zweite Stellung verbracht werden, wird auf eine Eingabe des Bedieners in eine Eingabeeinrichtung hin das zweite Ventil geschlossen, das dritte Ventil geschlossen und das erste Ventil geöffnet. Soll danach die Arbeitseinheit wieder in die erste Stellung zurückgebracht werden, wird auf eine entsprechende Eingabe hin das erste Ventil geschlossen und das zweite Ventil und das dritte Ventil geöffnet. Dann strömt das Medium aus der Kammer des Aktors in den Druckspeicher und in den Vorratsbehälter für das Medium. Ein parallel zum Druckbegrenzerventil geschaltetes drittes Ventil ist dann rechtzeitig wieder zu schließen, um zu erreichen, dass der verbleibende Druck des Mediums zur Erzeugung des gewünschten Bodendrucks der Arbeitseinheit ausreicht.

Vorzugsweise weist das Arbeitsgerät mehrere Arbeitseinheiten auf, die durch ihnen jeweils zugeordnete, separat ansteuerbare Aktoren bewegbar sind. Auswählbare Arbeitseinheiten können in die erste Stellung verbracht werden, während andere in der zweite Stellung verbleiben. Das kann beim Abschließen der Arbeit auf einem Feld sinnvoll sein, wenn die verbleibende Fläche zu schmal ist, um sie mit allen Arbeitseinheiten zu bearbeiten, oder wenn bei hoher Belastung der Arbeitseinheiten mit Erntegut eine Verringerung der Arbeitsbreite angemessen ist. Die Steuerung der einzelnen Arbeitseinheiten erfolgt, wie bereits oben angemerkt, in der Regel durch eine Eingabeeinrichtung, z.B. einen Joystick, wobei unzweckmäßige Betriebsarten der Aktoren insbesondere bei der Fahrt auf einer Straße ignoriert werden.

Bei einer derartigen Ausführungsform kann durch eine geeignete Ansteuerung der Aktoren erreicht werden, dass in der Vorwärtsbewegungsrichtung hintereinander angeordnete Arbeitseinheiten nacheinander (in Abhängigkeit von der Vortriebsgeschwindigkeit zeitlich verzögert) in die erste Stellung (Betriebsstellung) gelangen, wobei ihr Arbeitsbeginn auf einer sich quer zur Vorwärtsbewegungsrichtung erstreckenden Geraden liegt.

Die Erfindung eignet sich, wie bereits oben angemerkt, für beliebige Arbeitsgeräte. Beispiele sind Mähgeräte und - insbesondere mehrteilige - Pick-Ups.

In den Zeichnungen ist ein nachfolgend näher beschriebenes Ausführungsbeispiel der Erfindung dargestellt. Es zeigt:
- Fig. 1: eine Draufsicht auf ein mehrteiliges landwirtschaftliches Arbeitsgerät,
- Fig. 2: ein Hydraulikschema der Einrichtungen zum Bewegen der Arbeitseinheiten des Arbeitsgeräts,
- Fig. 3: eine Ansicht eines Bedienhebels des Trägerfahrzeugs,
- Fig. 4: ein Flussdiagramm, das den Betrieb der Steuerung beim Anheben der Arbeitseinheiten zeigt,
- Fig. 5: ein Flussdiagramm, das den Betrieb der Steuerung beim Absenken der Arbeitseinheiten zeigt, und
- Fig. 6: ein Flussdiagramm, das den Betrieb der Steuerung beim Mähanfang zeigt.

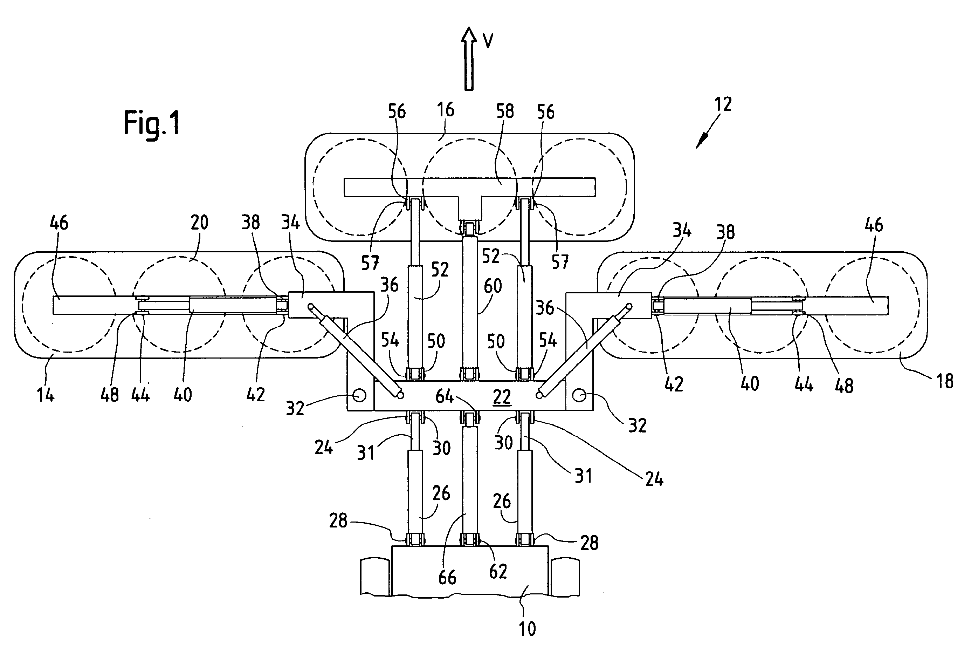

Die Figur 1 zeigt ein an einem Trägerfahrzeug 10 frontseitig adaptiertes, mehrteilig ausgeführtes landwirtschaftliches Arbeitsgerät 12, dessen schematisch dargestellten Arbeitseinheiten 14, 16 und 18 die Gesamtarbeitsbreite des landwirtschaftlichen Arbeitsgeräts 12 in Einzelarbeitsbreiten unterteilen, wobei die als rotierende Mähorgane 20 angedeuteten Arbeitsorgane der Arbeitseinheiten 14-18 auch durch beliebige landwirtschaftliche Arbeitsorgane, wie beispielsweise Bodenbearbeitungsorgane, zur Heuwerbung einsetzbare Schwad- oder Rechkreisel und beliebig ausgeführte Mähorgane beispielsweise in Form von Schneidwerken oder Maisgebissen ersetzt sein können.

Das somit als mehrteiliges Großflächenmähwerk ausgeführte landwirtschaftliche Arbeitsgerät 12 verfügt über einen Hauptrahmen 22, der in seinem rückwärtigen Bereich Anschlussstellen 24 aufweist, in die jeweils ein Ende zweier Hubzylinder 26 eingreift, die anderen Endes am Trägerfahrzeug 10 um eine quer zur Fahrtrichtung V verlaufende Achse 28 verschwenkbar angeordnet sind, wobei das Ende der Hubzylinder 26 und die Anschlussstellen 24 ebenfalls von einer quer zur Fahrtrichtung V liegenden Schwenkachse 30 durchsetzt werden.

Der Hauptrahmen 22 verfügt an beiden Enden über in vertikale Richtung weisende Schwenkachsen 32, an welchen L-förmige Seitenrahmen 34 drehbar angelenkt sind, wobei die Drehbewegung um die Achse 32 dadurch erreicht wird, dass jeder Seitenrahmen 34 zusätzlich über jeweils einen hydraulischen Schwenkzylinder 36 mit dem Hauptrahmen 22 verbunden ist. Jeder Seitenrahmen 34 verfügt über Halteflansche 38, die jeweils das zylinderseitige Ende von als Aktoren dienenden einfachwirkenden Hubzylindern 40 um in Fahrtrichtung V weisende Achsen 42 drehbar aufnehmen. Kolbenstangenseitig sind die Hubzylinder 40 ebenfalls um in Fahrtrichtung V weisende Achsen 44 an einem Hauptrahmen 46 der seitlichen Arbeitseinheiten 14, 18 in Halteflanschen 48 drehbar angelenkt, wobei die Arbeitseinheiten 14, 18 in an sich bekannter Weise über wenigstens ein weiteres, nicht dargestelltes Gelenk mit den Seitenrahmen 34 verbunden sind, so dass eine Druckbeaufschlagung der Hubzylinder 40 zu einem Verschwenken der Arbeitseinheiten 14, 18 in vertikaler Richtung führt.

Damit auch ein Verschwenken der frontseitig am Hauptrahmen 22 angeordneten Arbeitseinheit 16 möglich wird, verfügt der Hauptrahmen 22 über weitere Halteflansche 50, die das zylinderseitige Ende von als Aktoren dienenden einfachwirkenden Hubzylindern 52 um quer zur Fahrtrichtung V liegende Achsen 54 schwenkbar aufnehmen. Das kolbenstangenseitige Ende der Hubzylinder 52 wird von Halteösen 56, die an einem Hauptrahmen 58 der Arbeitseinheit 16 angeordnet sind, um ebenfalls quer zur Fahrtrichtung V angeordnete Achsen 57 drehbar aufgenommen. Durch Zwischenschaltung wenigstens einer, in ihrer Länge nicht veränderbaren Koppelstange 60 zwischen der Arbeitseinheit 16 und dem Hauptrahmen 22 wird sichergestellt, dass bei Druckbeaufschlagung der Hubzylinder 52 die frontseitige Arbeitseinheit 16 in vertikaler Richtung verschwenken kann.

Um das gesamte landwirtschaftliche Arbeitsgerät 12 in vertikaler Richtung in der Höhe verstellen zu können, kann zwischen dem Trägerfahrzeug 10 und dem landwirtschaftlichen Arbeitsgerät 12 eine in Halteflanschen 62, 64 drehbar gelagerte, in ihrer Länge nicht veränderbare Koppelstange 66 angeordnet sein, sodass eine Druckbeaufschlagung der Hubzylinder 26 durch die an sich bekannte und deshalb nicht dargestellte Bordhydraulik des Trägerfahrzeugs 10 zum Verschwenken des Hauptrahmens 22 des landwirtschaftlichen Arbeitsgerätes 12 in vertikaler Richtung führt.

Der in Figur 1 dargestellte Mechanismus ist nur ein Beispiel für ein Arbeitsgerät mit einer zwischen Betriebsstellung und Außerbetriebsstellung bewegbaren Arbeitseinheit. Andere derartige Geräte, an denen die Erfindung ebenfalls Verwendung finden kann, sind beispielsweise in der DE 43 22 263 A und in der DE 101 21 014 A offenbart.

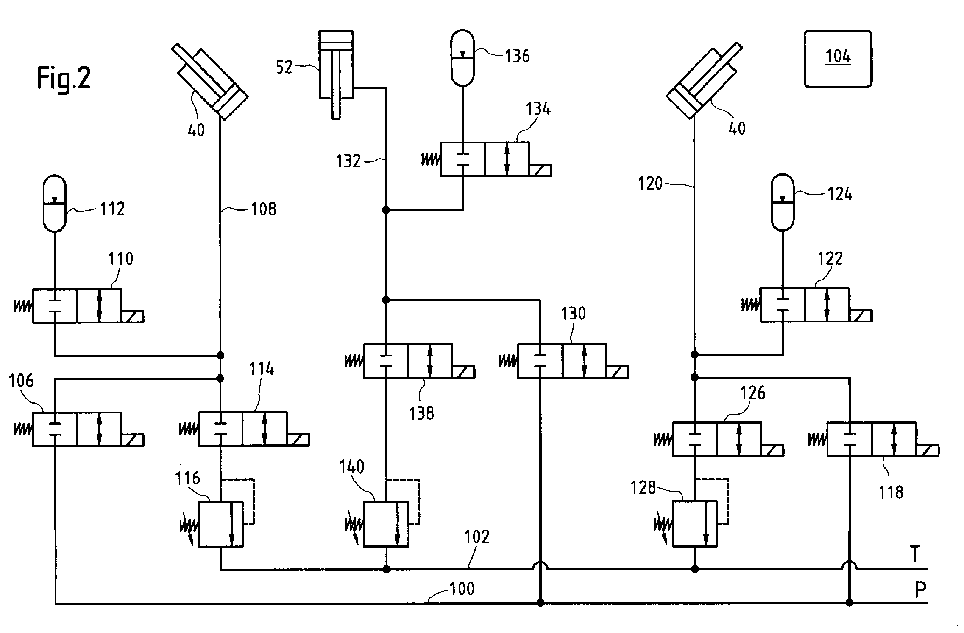

Die Figur 2 zeigt ein Hydraulikdiagramm der zum Bewegen der Arbeitseinheiten 14, 16, 18 zwischen der ihrer Betriebsstellung und Außerbetriebsstellung dienenden Elemente. Eine erste Leitung 100 ist über eine (nicht eingezeichnete) Steckverbindung mit einer Quelle P unter Druck stehender Hydraulikflüssigkeit verbunden, die sich auf dem Trägerfahrzeug 10 befindet. Die Hydraulikflüssigkeit dient als Medium zum Beaufschlagen der Aktoren. Eine zweite Leitung ist über eine (nicht eingezeichnete) Steckverbindung mit einem Vorratsbehälter T für entspannte Hydraulikflüssigkeit verbunden, der sich ebenfalls auf dem Trägerfahrzeug befindet. Ein elektromagnetisch gesteuertes (erstes) Absperrventil 106 ist eingangsseitig mit der Leitung 100 und ausgangsseitig mit einer Leitung 108 verbunden, die mit dem Kolbenraum des Hydraulikzylinders 40 der linken Arbeitseinheit 14 verbunden ist. Die Leitung 108 ist weiterhin mit einem elektromagnetischen (zweiten) Absperrventil 110 verbunden, das anderen Endes mit einem elastischen (pneumatischen) Druckspeicher 112 verbunden ist. Außerdem ist die Leitung 108 mit einem weiteren, elektromagnetisch gesteuerten (dritten) Absperrventil 114 verbunden, das ausgangsseitig über ein Druckbegrenzerventil 116 mit der Leitung 102 verbunden ist.

Für die rechte Arbeitseinheit 18 ist ein elektromagnetisch gesteuertes Absperrventil 118 eingangsseitig mit der Leitung 100 und ausgangsseitig mit einer Leitung 120 verbunden, die mit dem Kolbenraum des Hydraulikzylinders 40 der rechten Arbeitseinheit 18 verbunden ist. Die Leitung 120 ist weiterhin mit einem elektromagnetischen Absperrventil 122 verbunden, das anderen Endes mit einem elastischen (pneumatischen) Druckspeicher 124 verbunden ist. Außerdem ist die Leitung 120 mit einem weiteren, elektromagnetisch gesteuerten Absperrventil 126 verbunden, das ausgangsseitig über ein Druckbegrenzerventil 128 mit der Leitung 102 verbunden ist.

Für die mittlere Arbeitseinheit 16 ist ein elektromagnetisch gesteuertes Absperrventil 130 eingangsseitig mit der Leitung 100 und ausgangsseitig mit einer Leitung 132 verbunden, die mit dem Kolbenstangenraum des Hydraulikzylinders 52 der mittleren Arbeitseinheit 16 verbunden ist. Die Leitung 132 ist weiterhin mit einem elektromagnetischen Absperrventil 134 verbunden, das anderen Endes mit einem elastischen (pneumatischen) Druckspeicher 136 verbunden ist. Außerdem ist die Leitung 132 mit einem weiteren, elektromagnetisch gesteuerten Absperrventil 138 verbunden, das ausgangsseitig über ein Druckbegrenzerventil 140 mit der Leitung 102 verbunden ist.

Die Absperrventile 106, 110, 114, 118, 122, 126, 130, 134 und 138 werden durch eine schematisch eingezeichnete Steuerung 104 angesteuert. Die Druckbegrenzerventile 116, 128 und 140 sind durch die Steuerung verstellbar, so dass ihr Abschaltdruck ferngesteuert veränderbar ist. Die Steuerung kann sich auf dem Trägerfahrzeug 10 oder auf dem Arbeitsgerät 12 befinden.

Die Hydraulikzylinder 40 und 52 ermöglichen, die Arbeitseinheiten 14, 16, 18 um horizontale Schwenkachsen anzuheben und aus der in Figur 1 eingezeichneten Betriebsstellung in eine Außerbetriebsstellung zu verbringen. In der Außerbetriebsstellung sind die Kolbenraum-Kammern der Hydraulikzylinder 40 und die Kolbenstangenraum-Kammern der Hydraulikzylinder 52 mit Druck beaufschlagt, während die Hydraulikzylinder 40 und 52 in der Betriebsstellung druckentlastet sind. Die Arbeitseinheiten 14, 16 und 18 sind derart mechanisch am Hauptrahmen 22 aufgehängt, dass der dann in den Hydraulikzylindern 40 und 54 herrschende Druck den Auflagedruck der Arbeitseinheiten 14, 16, 18 auf dem Erdboden definiert.

Die Schwenkzylinder 36 erlauben, die seitlichen Arbeitseinheiten 14, 18 um die vertikalen Achse 32 nach hinten zu verschwenken. Die Schwenkzylinder 36 sind unabhängig von den Hydraulikzylindern 40, 52 zum vertikalen Verschwenken der Arbeitseinheiten 14, 16, 18 aktivierbar. Sie werden ebenfalls durch (nicht eingezeichnete), mit der Steuerung 104 verbundene elektromagnetische Absperrventile gesteuert. In der Regel werden die Schwenkzylinder 36 gleichzeitig mit den Hydraulikzylindern 40 aktiviert, obwohl auch zeitlich aufeinander folgende Aktivierungen denkbar wären.

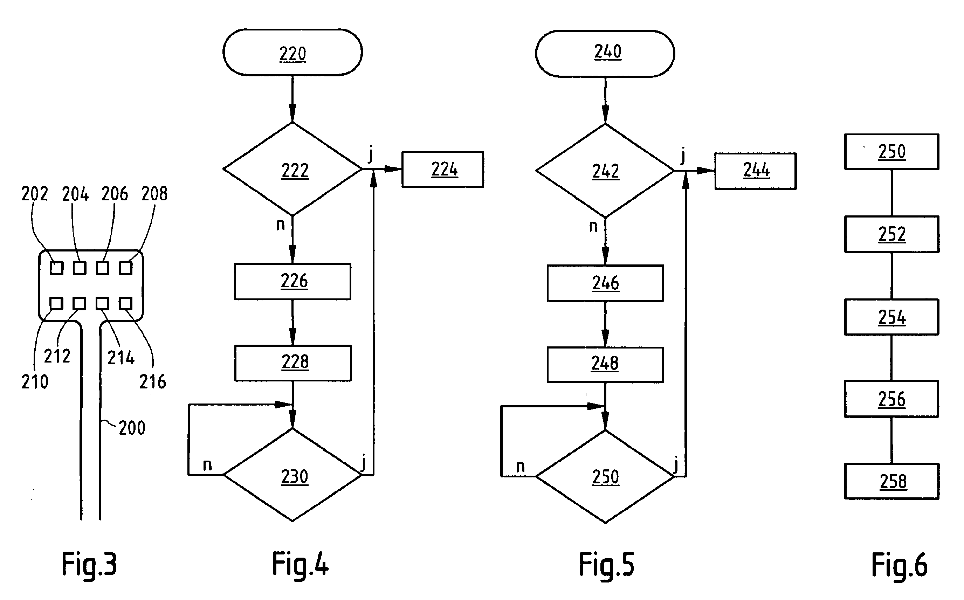

Die Figur 3 zeigt eine Ansicht des Bedienhebels 200 des Trägerfahrzeugs 10. Er befindet sich in dessen Kabine und ist insgesamt zur Vorgabe der Fahrgeschwindigkeit um eine quer zur Fahrtrichtung V verlaufende Achse schwenkbar. An seinem oberen Ende sind zwei übereinander angeordnete Reihe an Tasten 202, 204, 206, 208 bzw. 210, 212, 214 und 216 angeordnet. Die Tasten sind mit der Steuerung 104 verbunden. Die obere linke Taste 202 dient zum Anheben aller Arbeitseinheiten 14, 16, 18 in die Außerbetriebsstellung, während die seitlich daneben angeordneten Tasten es ermöglichen, die einzelnen Arbeitseinheiten separat anzuheben. Analog dienen die in der unteren Reihe angeordneten Tasten 210 - 216 dazu, alle oder einzelne der Arbeitseinheiten 14, 16, 18 in die Betriebsstellung abzusenken. Weitere nicht eingezeichnete Eingabemittel (Knöpfe oder Tasten) sind zur Eingabe des Auflagedrucks der Arbeitseinheiten 14 - 18 vorgesehen. Die Steuerung 104 stellt den Abschaltdruck der Druckbegrenzerventile 116, 128 und 140 entsprechend den Eingaben ein bzw. regelt sie unter Verwendung eines geeigneten Sensors.

Die Figur 4 zeigt ein Flussdiagramm, das die von der Steuerung 104 veranlassten Schaltvorgänge zeigt, wenn die Taste 202 gedrückt wurde. Nach dem Start im Schritt 220 wird zunächst in Schritt 222 abgefragt, ob sich die Arbeitseinheiten 14, 16, 18 schon in der Außerbetriebsstellung befinden, was anhand des Signals geeigneter Sensoren abprüfbar ist. Ist das der Fall, folgt Schritt 224, in dem der Vorgang beendet wird. Anderenfalls folgt Schritt 226, indem die Absperrventile 110, 114, 122, 126, 134 und 138 geschlossen werden. Im nachfolgenden Schritt 228 werden die Ventile 106, 118 und 130 geöffnet. Dann folgt Schritt 230, in dem abgefragt wird, ob sich die Arbeitseinheiten 14, 16 und 18 in der Außerbetriebsstellung befinden. Wenn nein, folgt wieder Schritt 230, anderenfalls Schritt 224. Beim Anheben werden die Druckspeicher 112, 124 und 136 somit von den Hydraulikzylindern 40 und 52 getrennt, um die Druckspeicher nicht unnötig mit Druck zu beaufschlagen und die Arbeitseinheiten 14 - 18 schnell anzuheben. Die Zylinder 40 und 52 werden aus der Leitung 100 mit Druck beaufschlagt und verschwenken die Arbeitseinheiten 14, 16 und 18 in der oben beschriebenen Weise nach oben.

Die Figur 5 zeigt ein Flussdiagramm, nach dem die Steuerung 104 vorgeht, wenn die Taste 210 gedrückt wurde. Nach dem Start im Schritt 240 wird im Schritt 242 zunächst abgefragt, ob sich die Arbeitseinheiten 14, 16 und 18 bereits in der Betriebsstellung befinden. Falls das der Fall ist, folgt Schritt 244, in dem die Routine endet. Anderenfalls folgt Schritt 246, in dem die Absperrventile 106, 118 und 130 geschlossen werden. Im nachfolgenden Schritt 248 werden die Absperrventile 114, 126 und 138 geöffnet, was dazu führt, dass die Hydraulikflüssigkeit durch die Druckbegrenzerventile 116, 128 und 140 in die Leitung 102 und in den Vorratsbehälter strömt. Gleichzeitig (oder kurz vorher bzw. danach) werden im Schritt 248 die Absperrventile 110, 122 und 134 geöffnet. Dadurch strömt auch Hydraulikflüssigkeit aus den Zylindern 40 und 52 in die Druckspeicher 112, 124 und 136. Der Druck in den Zylindern 40 und 52 baut sich relativ schnell ab, so dass die Arbeitseinheiten 14, 16 und 18 sich unter Wirkung der Schwerkraft schnell und sanft absenken. Es folgt Schritt 250, in dem abgefragt wird, ob sich die Arbeitseinheiten 14, 16 und 18 bereits in der Betriebsstellung befinden. Ist das nicht der Fall, folgt wieder Schritt 250, anderenfalls Schritt 244.

Der Druck in den Hydraulikzylindern 40 und 52 und somit der Bodendruck der Arbeitseinheiten 14, 16, 18 wird in der Betriebsstellung durch die Druckbegrenzerventile 116, 128, 140 definiert, deren Abschaltdruck durch die Steuerung 104 steuerbar ist. Die Arbeitseinheiten 14, 16 und 18 berühren in der Arbeitsposition den Boden und übertragen, falls sie auf Bodenunebenheiten treffen, Stoßbelastungen auf das Arbeitsgerät 10. Das führt dazu, dass die Kolben der Zylinder 40 und 52 verschiedene Lagen einnehmen. Die elastischen Druckspeicher 112, 124 und 136 nehmen in Abhängigkeit von der Stellung der Kolben Hydraulikflüssigkeit auf oder geben sie ab. Die Druckspeicher übernehmen somit die Funktion eines Stöße abfedernden Dämpfungselementes, so dass die bei bekannten Arbeitsgeräten vorgesehenen mechanischen Dämpfungselemente, z. B. Druckfedern, entfallen können.

Falls eine der Tasten 204 - 208 oder 212 - 216 aktiviert wird, werden von der Steuerung 104 nur die der jeweils ausgewählten Arbeitseinheit zugeordneten Ventile aktiviert, so dass auch nur diese Arbeitseinheit bewegt wird.

In einigen Fällen kann es sinnvoll sein, einen Mähvorgang an einer Geraden zu beginnen, die quer zur Fahrtrichtung V verläuft. Nach Betätigen einer weiteren, in Figur 3 nicht eingezeichneten Taste am Bedienhebel 200 wird der in Figur 6 schematisch dargestellte Ablauf initiiert. Nach dem Start im Schritt 250 wird im Schritt 252 zuerst die mittlere Arbeitseinrichtung 16 abgesenkt, indem die in Figur 5 dargestellte Prozedur nur für die der mittleren Arbeitseinheit 16 zugeordneten Hydraulikelemente durchgeführt wird. Im nachfolgenden Schritt 254 wird dann anhand der mit einem Sensor gemessenen Fahrgeschwindigkeit des Trägerfahrzeugs 10 und des Versatzes der Arbeitseinheiten 14 und 18 einerseits und 16 andererseits in Fahrtrichtung berechnet, wie lange es dauert, bis die seitlichen Arbeitseinheiten 14 und 18 dort ankommen, wo die mittlere Arbeitseinheit 16 ihre Arbeit begonnen hat. In Schritt 256 werden die äußeren Arbeitseinheiten 14 und 18 zu dem Zeitpunkt abgesenkt, der im Schritt 254 berechnet wurde. Dabei wird wieder eine Prozedur durchgeführt, wie sie in Figur 5 offenbart ist. Schließlich endet der Vorgang im Schritt 258. Eine analoge Prozedur kann zum Anheben der Arbeitseinheiten 14 - 18 auf einer Linie vorgesehen sein.

## Patentansprüche

1. Einrichtung zum Bewegen einer Arbeitseinheit (14, 16, 18) eines landwirtschaftlichen Arbeitsgeräts (12) zwischen einer ersten Stellung und einer zweiten Stellung, mit einem Aktor (40, 52), der eine mit einem unter Druck stehenden Medium beaufschlagbare Kammer aufweist und mit der Arbeitseinheit (14, 16, 18) derart gekoppelt ist, dass durch Beaufschlagen der Kammer mit dem Medium die Arbeitseinheit (14, 16, 18) in die zweite Stellung und durch Nichtbeaufschlagen der Kammer mit dem Medium die Arbeitseinheit (14, 16, 18) in die erste Stellung verbringbar ist, einem Druckspeicher (112, 124, 136), einem ersten Ventil (106, 118, 130), das sich zwischen einer Quelle des unter Druck stehenden Mediums und der Kammer befindet, einem zweiten Ventil (110, 122, 134), das sich zwischen der Kammer und dem Druckspeicher (112, 124, 136) befindet, und einem Druckbegrenzerventil (116, 128, 140), durch welches die Kammer mit einem Vorratsbehälter verbunden ist, **dadurch gekennzeichnet, dass** ein drittes Ventil (114, 126, 138), welches sich zwischen der Kammer und dem Vorratsbehälter für das Medium befindet, und eine mit den Ventilen (106, 110, 114, 116, 118, 122, 126, 128, 130, 134, 138, 140) verbundene elektronische Steuerung (104) vorgesehen ist, derart ausgebildet, dass bei Schließen des ersten Ventils (106, 118, 130) das zweite Ventil (110, 122, 134) und das dritte Ventil (114, 126, 138) automatisch öffenbar sind, so dass die Kammer des Aktors (40, 52) mit dem Druckspeicher (112, 124, 136) verbunden ist, wenn sich die Arbeitseinheit von der zweiten Stellung in die erste Stellung bewegt.

2. Einrichtung nach Anspruch 1, **dadurch gekennzeichnet dass** die Steuerung derart ausgebildet ist, dass beim Schließen des zweiten und dritten Ventils (110, 122, 134, 114, 126, 138) das erste Ventil (106, 118, 130) automatisch öffenbar ist, so dass die Kammer des Aktors (40, 52) von dem Druckspeicher (112, 124, 136) getrennt ist, wenn sich die Arbeitseinheit (14, 16, 18) von der ersten Stellung in die zweite Stellung bewegt und/oder in der zweiten Stellung befindet.

3. Einrichtung nach Anspruch 1 oder 2, **dadurch gekennzeichnet, dass** die Kammer in der ersten Stellung der Arbeitseinheit (14, 16, 18) mit dem Druckspeicher (112, 124, 136) verbunden ist, und dass ein in der Kammer des Aktors (40, 52) vorhandener Druck in der erste Stellung den Bodendruck der Arbeitseinheit (14, 16, 18) definiert.

4. Einrichtung nach einem der vorhergehenden Ansprüche, **dadurch gekennzeichnet, dass** das Druckbegrenzerventil (116, 128, 140) vorzugsweise über die Steuerung (104) ferneinstellbar ist.

5. Einrichtung nach einem der vorhergehenden Ansprüche, **dadurch gekennzeichnet, dass** das dritte Ventil (114, 126, 138) mit dem Druckbegrenzerventil (116, 128, 140) in Reihe geschaltet ist.

6. Einrichtung nach einem der vorhergehenden Ansprüche, **dadurch gekennzeichnet, dass** das Arbeitsgerät (12) mehrere Arbeitseinheiten (14, 16, 18) aufweist, die durch separat ansteuerbare Aktoren (40, 52) zwischen der ersten Stellung und der zweiten Stellung bewegbar sind.

7. Einrichtung nach Anspruch 6, **dadurch gekennzeichnet, dass** die Aktoren (40, 52) derart ansteuerbar sind, dass die Arbeitseinheiten (14, 16, 18) derart in die erste Stellung, insbesondere Betriebsstellung, bewegt werden, dass ihre Arbeitsanfangspunkte bei einer Vorwärtsbewegung des Arbeitsgeräts (12) auf einer Geraden liegen.

8. Selbstfahrendes Mähfahrzeug mit wenigstens zwei Arbeitseinheiten (14 - 18) und einer Einrichtung nach einem der vorhergehenden Ansprüche.

## Claims

1. Device for moving a working unit (14, 16, 18) of an agricultural implement (12) between a first position and a second position, comprising an actuator (40, 52) which has a chamber to which a pressurized medium may be applied, and to which the working unit (14, 16, 18) is coupled such that, by applying medium to the chamber, the working unit (14, 16, 18) may be moved into the second position and, by not applying medium to the chamber, the working unit (14, 16, 18) may be moved into the first position, a pressure accumulator (112, 124, 136), a first valve (106, 118, 130) which is located between a source of the pressurized medium and the chamber, a second valve (110, 112, 134) which is located between the chamber and the pressure accumulator (112, 124, 136) and a pressure control valve (116, 128, 140) by means of which the chamber is connected to a storage container, **characterized in that** a third valve (114, 126, 138) is provided which is located between the chamber and the storage container for the medium, and an electronic control unit (104) is provided which is connected to the valves (106, 110, 114, 116, 118, 122, 126, 128, 130, 134, 138, 140) and configured such that, when closing the first valve (106, 118, 130), the second valve (110, 122, 134) and the third valve (114, 126, 138) may be automatically opened, so that the chamber of the actuator (40, 52) is connected to the pressure accumulator (112, 124, 136) when the working unit is moved from the second position into the first position.

2. Device according to Claim 1, **characterized in that** the control unit is configured such that, when closing the second and third valve (110, 122, 134, 114, 126, 138), the first valve (106, 118, 130) may be automatically opened, so that the chamber of the actuator (40, 52) is separated from the pressure accumulator (112, 124, 136) when the working unit (14, 16, 18) moves from the first position into the second position and/or is located in the second position.

3. Device according to Claim 1 or 2, **characterized in that** the chamber is connected in the first position of the working unit (14, 16, 18) to the pressure accumulator (112, 124, 136) and **in that** a pressure prevailing in the chamber of the actuator (40, 52) defines, in the first position, the pressure of the working unit (14, 16, 18) on the ground.

4. Device according to one of the preceding claims, **characterized in that** the pressure control valve (116, 128, 140) may be remotely adjusted, preferably via the control unit (104).

5. Device according to one of the preceding claims, **characterized in that** the third valve (114, 126, 138) is arranged in series with the pressure control valve (116, 128, 140).

6. Device according to one of the preceding claims, **characterized in that** the working device (12) comprises a plurality of working units (14, 16, 18) which may be moved between the first position and the second position by separately controllable actuators (40, 52).

7. Device according to Claim 6, **characterized in that** the actuators (40, 52) may be controlled such that the working units (14, 16, 18) are moved into the first position, in particular an operating position, such that the initial working points thereof are located on a straight line during a forward movement of the working device (12).

8. Self-propelled mower comprising at least two working units (14 - 18) and a device according to one of the preceding claims.

## Revendications

1. Dispositif destiné à déplacer une unité de travail (14, 16, 18) d'un outil de travail (12) agricole entre une première position et une deuxième position, comportant un actionneur (40, 52) qui comporte une chambre, pouvant être alimentée par un fluide sous pression, et est couplé à l'unité de travail (14, 16, 18) de telle sorte que, sous l'effet de l'alimentation de la chambre avec le fluide, l'unité de travail (14, 16, 18) peut être amenée dans la deuxième position et, lorsque la chambre n'est pas alimentée avec le fluide, l'unité de travail (14, 16, 18) peut être amenée dans la première position, un réservoir de pression (112, 124, 136), une première vanne (106, 118, 130), qui se situe entre une source de fluide sous pression et la chambre, une deuxième vanne (110, 122, 134), qui se situe entre la chambre et le réservoir de pression (112, 124, 136), et un limiteur de pression (116, 128, 140), par lequel la chambre est reliée à un réservoir de stockage, **caractérisé en ce qu'**il est prévu une troisième vanne (114, 126, 138), qui se situe entre la chambre et le réservoir de stockage pour le fluide, et une commande électronique (104), qui est reliée aux vannes (106, 110, 114, 116, 118, 122, 126, 128, 130, 134, 138, 140) et qui est configurée de telle sorte qu'en cas de fermeture de la première vanne (106, 118, 130), la deuxième vanne (110, 122, 134) et la troisième vanne (114, 126, 138) peuvent s'ouvrir automatiquement , de telle sorte que la chambre de l'actionneur (40, 52) est reliée au réservoir de pression (112, 124, 136) lorsque l'unité de travail est déplacée depuis la deuxième position dans la première position.

2. Dispositif selon la revendication 1, **caractérisé en ce que** la commande (104) est configurée de telle sorte que lors de la fermeture de la deuxième et de la troisième vanne (110, 122, 134, 114, 126, 138), la première vanne (106, 118, 130) peut s'ouvrir automatiquement, de telle sorte que la chambre de l'actionneur (40, 52) est séparée du réservoir de pression (112, 124, 136), lorsque l'unité de travail (14, 16, 18) est déplacée de la première position dans la deuxième position et/ou se situe dans la deuxième position.

3. Dispositif selon la revendication 1 ou 2, **caractérisé en ce que**, dans la première position de l'unité de travail (14, 16, 18), la chambre est reliée au réservoir de pression (112, 124, 136), et **en ce qu'**une pression régnant dans la chambre de l'actionneur (40, 52) définit dans la première position la pression du fond de l'unité de travail (14, 16, 18).

4. Dispositif selon l'une quelconque des revendications précédentes, **caractérisé en ce que** le limiteur de pression (116, 128, 140) peut être télécommandé de préférence par l'intermédiaire de la commande (104).

5. Dispositif selon l'une quelconque des revendications précédentes, **caractérisé en ce que** la troisième vanne (114, 126, 138) est montée en série avec le limiteur de pression (116, 128, 140).

6. Dispositif selon l'une quelconque des revendications précédentes, **caractérisé en ce que** l'outil de travail (12) comporte plusieurs unités de travail (14, 16, 18), qui peuvent être déplacées entre la première position et la deuxième position par des actionneurs (40, 52) activables séparément.

7. Dispositif selon la revendication 6, **caractérisé en ce que** les actionneurs (40, 52) sont activables de telle sorte que les unités de travail (14, 16, 18) sont déplacées dans la première position, en particulier la position de service, de telle sorte que leurs points de départ de travail lors d'un mouvement d'avance de l'outil de travail (12) se situent sur une droite.

8. Véhicule de récolte automoteur comportant au moins deux unités de travail (14 - 18) et un dispositif selon une des revendications précédentes.
